# EUROPEAN PATENT SPECIFICATION

(11) **EP 2 044 146 B1**
(45) Date of publication and mention of the grant of the patent: **10.05.2017**
(21) Application number: 07812780.0
(22) Date of filing: 11.07.2007
(51) Int. Cl.: C08K 5/29, C08K 5/16, C08L 27/12, C08F 14/18

(54) **SCORCH SAFE FLUOROPOLYMER COMPOSITIONS**
FLUORPOLYMER-ZUSAMMENSETZUNGEN STABILIERT GEGEN VORZEITIGE VERNETZUNG
COMPOSITIONS FLUOROPOLYMÈRES RÉSISTANTES À LA VULcANISATION PRÉMATURE

(30) Priority: 24.07.2006 US 459458
(43) Date of publication of application: 08.04.2009
(73) Proprietor: 3M Innovative Properties Company, St. Paul, MN 55133-3427 (US)
(72) Inventor: ADAIR, Eric W., Saint Paul, Minnesota 55133-3427 (US); GROOTAERT, Werner M.A., Saint Paul, Minnesota 55133-3427 (US); GUERRA, Miguel A., Saint Paul, Minnesota 55133-3427 (US)
(74) Representative: Vossius & Partner Patentanwälte Rechtsanwälte mbB
(86) International application number: PCT/US2007/073211
(87) International publication number: WO 2008/014119

(56) References cited:
- WO-A1-2005/000917
- US-A1- 2004 072 959
- US-B1- 6 281 296
- US-B2- 6 846 880
- US-B2- 6 887 927
- US-B2- 6 992 143

## Description

### TECHNICAL FIELD

This invention relates to fluoropolymer compositions with amidine-containing curative compounds, curable compositions that resist scorching, and a method for making scorch resistant fluoropolymer compositions.

### BACKGROUND

Fluoropolymers include, for example, crosslinked fluoroelastomers, curable fluoroelastomer gums, and semi-crystalline fluoroplastics. Fluoroelastomers generally are tolerant to high temperatures and harsh chemical environments. Thus, they are particularly useful as seals, gaskets, and molded parts in systems that are exposed to elevated temperatures and/or corrosive chemicals. Such parts are used in the automotive, chemical processing, semiconductor, aerospace, and petroleum industries, among others.

Fluoroelastomers often include a cure-site component to facilitate cure in the presence of a cure catalyst. The selection of specific cure catalysts is often dependent on the type of cure-site components included in the fluoroelastomer. Conventional cure catalysts often lack the desired level of rheology control during processing. Cure catalysts are generally selected to ensure proper curing during thermal processing of the fluoroelastomer. The cure catalyst, if selected improperly, may adversely affect the fluoroelastomer by initiating crosslinking too rapidly during thermal processing, thereby increasing the viscosity of the composition. The increase in viscosity results in the undesirable scorching of the fluoroelastomer in the processing equipment. Cure catalyst selected with weaker initiation strength can prevent scorching but may also adversely effect subsequent molding and the physical properties such as compression set of the molded article due to insufficient crosslinking. US6846880 discloses fluoropolymers compositions with amidine-containing curative compounds.

### SUMMARY

In one aspect, the invention relates to a composition that includes a fluoropolymer having interpolymerized units derived from a nitrogen-containing cure site monomer and a cure catalyst derived from a mono-amidine and trifluoroacetic acid. The composition is essentially scorch safe during conventional thermal processing. Scorch safe is a term utilized in the fluoroelastomer industry to indicate that the compound may be thermally processed at conventional temperature ranges throughout the article forming process while maintaining its ability to crosslink into a desirable finished article.

In another aspect, the invention relates to method for improving the scorch resistance of a curable composition. The scorch resistance of the curable composition is enhanced by mixing a cure catalyst derived from a mono-amidine and trifluoroacetic acid with a fluoropolymer composition. The fluoropolymer composition includes inter-polymerized units derived from a nitrogen containing cure site monomer.

In an additional aspect, the method for making a fluoropolymer composition comprises forming a mixture of a composition including a fluoropolymer having interpolymerized units derived from a nitrogen-containing cure site monomer and a cure catalyst derived from a mono-amidine and trifluoroacetic acid, shaping the mixture, curing the shaped mixture, and optionally heat aging the cured mixture. Described herein are also articles containing the curable or cured compositions such as sheets, films, hoses, gaskets, and O-rings. The invention is particularly desirable for articles with good physical properties and low compression set at high temperatures, while being translucent, or even transparent, to visible light.

The inventive compositions retain the advantages of the use of nitrogen-containing cure site monomers (*e.g*., nitrile group containing cure site monomers) such as the high temperature performance properties. At the same time, the compositions exhibit improved properties, such as scorch resistance.

The details of embodiments of the invention are set forth in the description below. Other features, objects, and advantages of the invention will be apparent from the description and from the claims below.

### DETAILED DESCRIPTION

The composition of the present invention includes a fluoropolymer having interpolymerized units derived from a nitrogen-containing cure site monomer and a cure catalyst. The cure catalyst is derived from a mono-amidine and trifluoroacetic acid. The novel composition is essentially scorch safe during conventional thermal processing.

The rubber property of scorch is essentially defined as premature cross-linking. Scorch occurs when an uncured compound becomes cross-linked during processing, thus interfering with the forming operation and essentially ruining the final article being manufactured. Scorch characteristics of a specific material are often defined by the "scorch time" which represents the time to onset of vulcanization at a particular temperature, i.e., represents the time available for processing the material at any given temperature. The Mooney Viscosity test described in ASTM Standard D 1646 is often used to determine the scorch characteristics of compounded rubber. Furthermore, the time required for the compound to scorch in a process at a given temperature is most commonly measured using the t₅ value of the Mooney test. The t₅ value is the time needed for the Mooney value to increase five points. Since it is required when processing rubber that the "scorch time" be longer than the maximum heat history and time accumulated during processing, a compound with a longer "scorch time", i.e., a longer t₅ is desirable. A compound that is considered "scorch safe" or "scorch resistant" is a compound that can be used throughout the forming process, at the given temperatures, and still be able to be cross-linked into a useable article. The corresponding t₅ value that defines a "scorch safe" compound may vary from process to process as well as from material to material. Thus those of ordinary skill in the art are capable of selecting specific processing conditions, materials, and amounts of materials to achieve a desirable scorch safe compound.

Due to their relatively high viscosities and high specific gravities, fluoropolymers are generally processed at higher temperatures than normally used for other rubber materials. Typical processing temperatures range from 50 °C to as high as 150 °C, nominally 100 °C. For purposes of the invention, a curable fluoropolymer compound to be considered "scorch safe", generally it should have a long enough t₅ value in that processing temperature range. Most preferably, a t₅ value of greater than 10 minutes at 80 °C to 110 °C could be considered "scorch safe".

The present invention may be applicable in enhancing the scorch safe characteristics of a curable composition. The desired scorch safe composition is accomplished through the creation of a mixture of a cure catalyst derived from a mono-amidine and trifluoroacetic acid
with a fluoropolymer composition. The fluoropolymer composition includes inter-polymerized units derived from a nitrogen containing cure site monomer. The cure catalyst may preferably be admixed by either first forming a salt with the amidine composition and the acid and subsequently admixing the salt with the fluoropolymer composition. Alternatively, the acid and the amidine compound may be admixed in situ with the fluoropolymer and still provide a cure catalyst capable of creating a scorch safe composition.

### Cure Catalyst

The cure catalyst of the present invention is a combination of a mono-amidine compound and trifluoroacetic acid. The combination of the specific cure catalyst with the fluoropolymers having interpolymerized units derived from a nitrogen containing cure site monomer enable improved thermal processing of the compositions.

Herein also described is a cure catalyst which may include a mono-amidine, bis-amidine, tris-amidine, or tetra-amidine, or a salt of any of these. In addition, combinations of more than one amidine and/or amidine salt can be used. Preferably, a mono-amidine, and most preferably a perfluorinated mono-amidine, is utilized. The cure catalyst of the present invention uses a mono-amidine, preferably a fluorinated mono-amidine.

The amidine described herein comprises a compound having the general formula X-Y(-Z)ₙ. In this formula, X is a moiety of Formula I: 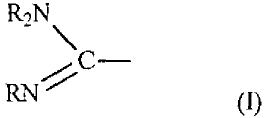 wherein each R is, independently, H, an optionally substituted alkyl, alkenyl, aryl, alkaryl, or alkenylaryl group, Y is a bond or a linking group, Z is H or a moiety according to Formula I, which may be the same or different than X, and n is an integer from I to 3. In addition, the amidine-containing curative can comprise a salt of an XYZₙ material or the precursors of a salt of an XYZₙ material can be provided separately or as a mixture.

"Alkyl" means an aliphatic hydrocarbon group that may be linear or branched having from 1 to 15 carbon atoms, in some embodiments 1 to 10 carbon atoms. "Branched" means that one or more lower alkyl groups such as methyl, ethyl, or propyl are attached to a linear alkyl chain. "Lower alkyl" means having 1 to 6 carbon atoms in the chain, which may be linear or branched. The alkyl group may be substituted by one or more halo atoms, cycloalkyl, or cycloalkenyl groups.

"Alkenyl" means an aliphatic hydrocarbon group containing a carbon-carbon double bond and which may be straight or branched having 2 to 15 carbon atoms in the chain. Preferred alkenyl groups have 2 to 10 carbon atoms in the chain, and more preferably 2 to 6 carbon atoms in the chain. "Lower alkenyl" means 2 to about 4 carbon atoms in the chain which may be straight or branched. The alkenyl group may be substituted by one or more halo atoms, cycloalkyl, or cycloalkenyl groups.

"Cycloalkyl" means a non-aromatic mono- or multicyclic ring system of 3 to 12 carbon atoms. Exemplary cycloalkyl rings include cyclopentyl, cyclohexyl, and cycloheptyl. The cycloalkyl group may be substituted by one or more halo atoms, methylene, alkyl, cycloalkyl, heterocyclyl, aralkyl, heteroaralkyl, aryl or heteroaryl. "Hetero" means oxygen, nitrogen, or sulfur in place of one or more carbon atoms.

"Cycloalkenyl" means a non-aromatic monocyclic or multicyclic ring system containing a carbon-carbon double bond and having 3 to 10 carbon atoms. The cycloalkenyl group may be substituted by one or more halo atoms, or methylene, alkyl, cycloalkyl, heterocyclyl, aralkyl, heteroaralkyl, aryl, or heteroaryl groups.

"Aryl" means an aromatic carbocyclic radical containing 6 to 12 carbon atoms. Exemplary aryl groups include phenyl or naphthyl optionally substituted with one or more aryl group substituents which may be the same or different, where "aryl group substituent" includes hydrogen, alkyl, cycloalkyl, optionally substituted aryl, optionally substituted heteroaryl, aralkyl, aralkenyl, aralkynyl, heteroaralkyl, heteroaralkenyl, heteroaralkynyl, hydroxy, hydroxyalkyl, alkoxy, aryloxy, aralkoxy, carboxy, acyl, aroyl, halo, nitro, cyano, carboxy, alkoxycarbonyl, aryloxycarbonyl, aralkoxycarbonyl, acylamino, aroylamino, alkylsulfonyl, arylsulfonyl, and other known groups.

"Alkaryl" means an aryl-alkyl- group in which the aryl and alkyl are as previously described. "Alkenylaryl" means an aryl-alkenyl- group in which the aryl and alkenyl are as previously described.

The above chemical group descriptions are known in the field and these descriptions are not intended to change the accepted meanings.

In the general formula X-Y(-Z)ₙ, Y can be a bond or a linking group R', which may be, or include, a hetero-atom such as oxygen, sulfur, phosphorous, or nitrogen. The linking group R' may be an alkyl, alkenyl, aryl, or alkaryl group having from 1 to about 15 carbon atoms, which may be linear or branched, and which may be non-fluorinated, fluorinated, or perfluorinated. When n is 1, Y is a bond or O, S, or a divalent R' group. When n is 2, the linking group is N or a trivalent R' group. When n is 3, the linking group is N⁽⁺⁾ or a tetravalent R' group. R' may be a substituted or unsubstituted methyl, methylene, or methine group. Thus, the curative of the invention may be a bis-amidine, tris-amidine, or tetra-amidine.

In the general formula X-Y(-Z)ₙ, Z can be hydrogen or a moiety according to Formula I, which may be the same or different than X.

In one embodiment, the cure catalyst is selected from carboxylate salts of an amidine, which amidine and/or salt optionally can be fluorinated or perfluorinated. The cure catalyst of the invention includes an amidine compound of Formula (II): 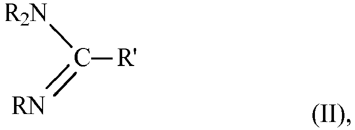 wherein R' is H, or an optionally substituted alkyl, alkenyl, aryl, alkaryl, or alkenylaryl group, which may be non-fluorinated, partially-fluorinated, or perfluorinated. Particular examples of R' include those of the formula CF₃(CF₂)ₖ and CF₃O(CF₂)ₖ, wherein k is 0-10. One subset of these materials includes those where each R is hydrogen. More particular examples include materials wherein R' has the formula CF₃, CF₃CF₂, CF₃CF₂CF₂, CF₃OCF₂CF₂, C3F7 and C3F7-O-CF(CF3).In a most preferred embodiment, the cure catalyst is a
perfluorinated mono-amidine salt derived from a perfluorinated mono-amidine and a perfluroinated carboxylic acid. Examples of such salts include CF₃-O-CF₂CF₂C(=NH)NH₃⁺⁻OCOCF₃, and CF₃-O-CF₂CF₂C(=NH)NH₃⁺⁻OCOCF₂CF₂OCF₃.

In one embodiment the amidine-containing portion of the cure catalyst also described herein includes the compounds of the formula: 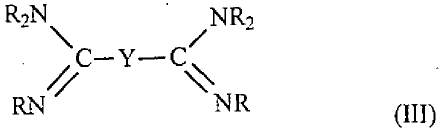 wherein Y is a linking group as described above, e.g., as CX₂OCX₂, (CX₂OCX₂)ₚ or (CX₂CX₂)ₚ where p is 1-5, each X is independently H, F, or Cl, each R is independently selected from H, a C1-C8 alkyl, alkenyl, a C6-C15 aryl, alkaryl, or alkenaryl, and wherein R is optionally substituted. In certain aspects, each R is independently selected from H, a C1-C6 alkyl or alkenyl, and R optionally is substituted. In particular embodiments, each R is H.

In one embodiment of the general formula XYZₙ, n is 1 and Z is X.

An acid having a pKa value of -1 to 4, preferably -1 to 1, is added to the amidine described herein. The acid may be combined with the selected amidine compound to form a salt thereof or mixed with the amidine in situ with the fluoropolymer composition.

In a preferred embodiment the acid is an organic acid and most preferably a perfluorinated organic acid. A non-limiting example of a perfluorinated acid includes compounds of the following formula: 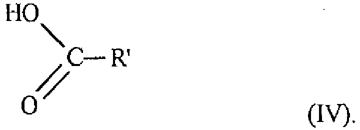 For example, those compositions of Formula IV having formula CF₃O(CF₂)ₖCOOH, wherein k is 1-10 are useful. Also useful are the composition wherein the carboxyl compound has the formula CF₃(CF₂)ⱼCOOH, wherein j is 0-15, preferably 0-8, and in certain embodiments more preferably 0-3. Preferred acids for the mono-amidine salts include trifluoroacetic acid, perfluoro-3-methoxypropionic acid, perfluoropropanoic acid and perfluorobutanoic acid. The present invention uses trifluoroacetic acid, and the inventive cure catalyst derives from a mono-amidine and trifluoroacetic acid.

Examples of amidine-acid cure catalysts also described herein include compounds of the formula: 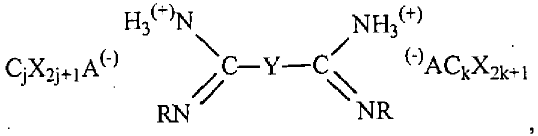 wherein j and k range from 1 to about 12, n is 1 to 5, Y is as described above, each X is independently H, F, or Cl, each R is independently selected from H, a C1-C8 alkyl, alkenyl, a C6-C15 aryl, alkaryl, or alkenaryl, and wherein R is optionally substituted, and A is an anion. Similar examples include mono-, tris-, and tetra- of the above noted formula.

Suitable anions for the above cure catalyst include any known anion that does not detrimentally affect the desired results. For example, the anion can be an acid anion or an acid derivative anion, from an organic or inorganic acid. Particular examples of the anion include COO, SO₃, SO₂, SO₂NH, PO₃, CH₂OPO₃, (CH₂O)₂PO₂, C₆H₄O, OSO₃, SO₂ 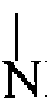 R', SO₂ 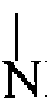 SO₂R', and SO₂ 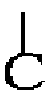 RSO₂R', preferably COO, C₆H₄O, SO₃, OSO₃, or SO₂ 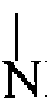 R', and in some embodiments most preferably COO, SO₃, and OSO₃.

### Fluoropolymer Compositions

Suitable fluoropolymers include interpolymerized units derived from a nitrogen-containing monomer and, preferably, at least two principal monomers. Examples of suitable candidates for the principal monomer include perfluoroolefins (*e.g*., tetrafluoroethylene (TFE) and hexafluoropropylene (HFP)), chlorotrifluoroethylene (CTFE), perfluorovinyl ethers (*e.g*., perfluoroalkyl vinyl ethers and perfluoroalkoxy vinyl ethers), and optionally, hydrogen-containing monomers such as olefins (*e.g*., ethylene and propylene), and vinylidene fluoride (VDF). Such fluoropolymers include, for example, fluoroelastomer gums and semi-crystalline fluoroplastics.

When the fluoropolymer is perhalogenated, preferably perfluorinated, it contains at least 50 mole percent (mol%) of its interpolymerized units derived from TFE and/or CTFE, optionally including HFP. The balance of the interpolymerized units of the fluoropolymer (10 to 50 mol%) is made up of one or more perfluoro vinyl ethers and a nitrogen-containing cure site monomer (*e.g*., a nitrile-containing vinylether or an imidate containing vinylether). The cure site monomer makes up from about 0.1 to about 5 mol% (more preferably from about 0.3 to about 2 mol%) of the elastomer. The invention is useful particularly in providing perfluoropolymers such as perfluoroelastomers.

When the fluoropolymer is not perfluorinated, it contains from 5 to 90 mol% of its interpolymerized units derived from TFE, CTFE, and/or HFP, from 5 to 90 mol% of its interpolymerized units derived from VDF, ethylene, and/or propylene, up to 40 mol% of its interpolymerized units derived from a vinyl ether, and from 0.1 to 5 mol% (more preferably from 0.3 to 2 mol%) of a nitrogen-containing cure site monomer.

The fluoroelastomer compositions of the invention are derived from interpolymerized units of fluorinated monomers such as those having the formula CF₂=CF-R_{f}, wherein R_{f} is fluorine or a C₁-C₈ perfluoroalkyl, along with hydrogen-containing C₂-C₉ olefins, which have less than half of the hydrogen atoms substituted with fluorine, more preferably less than one-fourth of the hydrogen atoms substituted with fluorine, and which are non-fluorinated in other embodiments. In some embodiments, the non-fluorinated olefin is absent.

Hydrogen-containing olefins useful in the invention include those of the formula CX₂=CX-R, wherein each X is, independently, hydrogen or fluorine or chlorine, R is hydrogen, fluorine, or a C₁-C₁₂, preferably C₁-C₃, alkyl. Preferred olefins include partially-fluorinated monomers (e.g., vinylidene fluoride) or hydrogen-containing monomers such as olefins including α-olefins (*e.g*., ethylene, propylene, butene, pentene, hexene) . Combinations of the above-mentioned materials are also useful.

Perfluorinated vinyl ethers also are suitable as comonomers in the present invention. Such perfluorovinylethers include, for example, CF₂=CFOCF₃, CF₂=CFOCF₂CF₂OCF₃, CF₂=CFOCF₂CF₂CF₂OCF₃, CF₂=CFOCF₂CF₂CF₃, CF₂=CFOCF₂CF(CF₃)OCF₂CF₂CF₃, and CF₂=CFOCF₂CF(CF₃)OCF₂CF(CF₃)OCF₂CF₂CF₃.

One example of a useful fluoropolymer is composed of principal monomer units of tetrafluoroethylene and at least one perfluoroalkyl vinyl ether. In such copolymers, the copolymerized perfluorinated ether units constitute from 1 to 60 mol% (more preferably 10 to 40 mol%) of total monomer units present in the polymer.

One or more other fluoropolymers may be incorporated into the fluoropolymer having interpolymerized units derived from a nitrogen-containing cure site monomer. In addition, one or more other fluoropolymers (which may include one or more copolymers) may be blended with the fluoropolymer (which may comprise a copolymer) having interpolymerized units derived from a nitrogen-containing cure site monomer. Such other fluoropolymers useful in a blend and/or copolymer include the entire array described above, and including homopolymers and copolymers comprising the interpolymerized units mentioned above. For example, polytetrafluoroethylene (PTFE) and PFA (tetrafluoroethylene-perfluorovinylether) are useful. The other fluoropolymer(s) may lack interpolymerized units derived from a nitrogen-containing cure site monomer and/or may include reactive sites adapted to a selected curative system. For example, two different fluoropolymers, each having interpolymerized units derived from a nitrogen-containing cure site monomer, such as a monomer comprising a nitrile group, may be blended to provide the fluoropolymer for the present invention.

Another fluoropolymer may be included along with another curative, such as described below, to provide particular properties. For example, a fluoropolymer suitable for peroxide curing and a peroxide curative may be included to improve chemical stability. Such a blend balances the thermal stability and the chemical stability of the resultant blend, and also may provide economic benefits. These other curatives also may be used to cure a blend of fluoropolymers having nitrogen-containing cure site monomers without the need to include a fluoropolymer lacking a nitrogen-containing cure site monomer.

The fluoropolymer(s) having nitrogen-containing cure site monomers preferably make up enough of the total fluoropolymer to provide increased thermal stability over a comparative fluoropolymer that lacks the composition of the present invention. This amount is generally at least 25 weight percent (wt %), more preferably at least 50 wt %, of the total fluoropolymer in the invention. In some embodiments, the fluoropolymer component is comprised entirely of fluoropolymer(s) with nitrogen-containing interpolymerized units.

The useful fluoropolymers may be prepared by known methods. For example, the polymerization process can be carried out by free-radical polymerization of the monomers as an aqueous emulsion polymerization or as a solution polymerization in an organic solvent. When fluoropolymer blends are desired, a preferable route of incorporation is through blending the fluoropolymer latices in the selected ratio, followed by coagulation and drying.

The nature and the amount of end groups are not critical to the fluoroelastomers of the invention. For example, the polymer can contain SO₃⁽⁻⁾ end groups generated by an APS/sulfite system, or the polymer may contain COO⁽⁻⁾ end groups generated by an APS initiator system or the fluoroelastomer can have "neutral" end groups, e.g., those generated by the use of fluorosulfinate initiator systems or organic peroxides. Chain transfer agents of any kind can significantly reduce the number of end groups. If desired, such as for improved processing, the presence of strong polar end groups such as SO₃⁽⁻⁾ can be minimized and in the case of COO⁽⁻⁾ or other unstable end groups, the amount can be reduced through known post treatments (*e.g*., decarboxylation, post-fluorination).

The cure site component allows one to cure the fluoropolymer. The cure site component can be partially or fully fluorinated. At least one cure site component of at least one fluoropolymer comprises a nitrogen-containing group. Examples of nitrogen-containing groups useful in the cure site monomers of the present invention include nitrile, imidate, amidine, amide, imide, and amine-oxide groups. Useful nitrogen-containing cure site monomers include nitrile-containing fluorinated olefins and nitrile-containing fluorinated vinyl ethers, such as: CF₂=CFO(CF₂)_{L}CN; CF₂=CFO[CF₂CF(CF₃)O]_{q}(CF₂O)_{y}CF(CF₃)CN; CF₂=CF[OCF₂CF(CF₃)]ᵣO(CF₂)ₜCN; and CF₂=CFO(CF₂)ᵤOCF(CF₃)CN, wherein L=2-12; q=0-4; r=1-2; y=0-6; t=1-4; and u=2-6. Representative examples of such monomers include CF₂=CFO(CF₂)₃OCF(CF₃)CN, and perfluoro(8-cyano-5-methyl-3,6-dioxa-1-octene).

Another suitable cure site component useful in the present invention is a fluoropolymer or fluorinated monomer material containing a halogen that is capable of participation in a peroxide cure reaction. Such a halogen may be present along a fluoropolymer chain and/or in a terminal position. Typically the halogen is bromine or iodine. Copolymerization is preferred to introduce the halogen in a position along a fluoropolymer chain. In this route, a selection of the fluoropolymer components mentioned above are combined with a suitable fluorinated cure site monomer. Examples of the bromo- or iodo- fluorolefins include: bromodifluoroethylene, bromotrifluoroethylene, iodotrifluoroethylene, 1-bromo-2,2-difluoroethylene, and 4-bromo-3,3,4,4-tetrafluorobutene-1, and examples of the bromo- or iodo-fluorovinyl ethers include: BrCF₂OCF=CF₂, BrCF₂CF₂OCF=CF₂, BrCF₂CF₂CF₂OCF=CF₂, CF₃CF(Br)CF₂OCF=CF₂, and the like. In addition, non-fluorinated bromo- or iodo- olefins, *e.g*., vinyl bromide and 4-bromo-1-butene, can be used.

The amount of cure site component in a side chain position of the fluoropolymer is generally from 0.05 to 5 mol% (more preferably from 0.1 to 2 mol%).

The cure site component may also occur in the terminal position of a fluoropolymer chain. Chain transfer agents or initiators are used to introduce the halogen in a terminal position. Generally, a suitable chain transfer agent is introduced in the reaction medium during polymer preparation, or derived from a suitable initiator.

Examples of useful chain transfer agents include those having the formula R_{f}Zₓ wherein R_{f} is a substituted or unsubstituted C₁-C₁₂ fluoroalkyl radical, which may be perfluorinated, Z is Br or I, and x is 1 or 2. Specific examples involving bromide include: CF₂Br₂, Br(CF₂)₂Br, Br(CF₂)₄Br, CF₃(Cl)Br, CF₃CF(Br)CF₂Br.

Examples of useful initiators include NaO₂S(CF₂)ₙX, wherein X is Br or I, and n is 1-10.

The amount of cure site component in a terminal position in the fluoropolymer is generally from 0.05 to 5 mol% (more preferably from 0.1 to 2 mol%).

Combinations of cure site components also are useful in the present invention. For example, a fluoropolymer containing a halogen that is capable of participation in a peroxide cure reaction may also contain a nitrogen-containing cure site component such as a nitrile group-containing cure site component. Generally, from 0.1 to 5 mol% (more preferably from 0.3 to 2 mol%) of the total cure site component is incorporated into the fluoropolymer.

An effective amount of the curative is used to crosslink the fluoropolymer. When the amount of curative is too low, the fluoropolymer may not crosslink sufficiently to develop the desired physical properties and/or may crosslink more slowly than desired. When the amount of curative is too high, the fluoropolymer may crosslink into a material that is less compliant than desired and/or may crosslink too rapidly for the desired process conditions. The selection of the particular parts of a composition can affect the amount of curative desired. For example, the type and/or amount of filler selected may retard or accelerate curing relative to a similar, but unfilled, composition, requiring an appropriate adjustment in the amount of curative that is known to those skilled in the field.

The composition of the fluoropolymer also affects the amount of one or more curatives. For example, when a blend of a nitrile-group containing fluoropolymer and another fluoropolymer lacking nitrile cure sites is used, an effective amount of a first selected curative compound is used to crosslink the fluoropolymer having interpolymerized units derived from a nitrile group-containing monomer together with an effective amount of a second selected curative compound used to crosslink the other fluoropolymer. The first and second selected curatives may have the same or different composition. That is, either one or both selected curatives may function to crosslink either one or both fluoropolymers.

Generally, the effective amount of curative, which may include more than one composition, is in the range of 0.1 to 10 parts curative per hundred parts of gum on a weight basis (phr) (more preferably 0.5 to 5 phr).

One of the advantages of the present invention is that it is suitable for forming an optically clear fluoroelastomer or perfluoroelastomer. Of course, fillers such as carbon black, grease, oil, dust, should be avoided when compounding the fluoropolymer of the invention to ensure that the clarity is not compromised by contaminants.

The fluoropolymer composition curing can also be modified by using other types of curatives along with the catalyst of the present invention. Examples of such curatives are known and include bis-aminophenols (*e.g*., U.S. Pat. No.5,767,204 and U.S. Pat. No. 5,700,879), bis-amidooximes (*e.g.,* U.S. Pat. No. 5,621,145), and ammonium salts (*e.g.,* U.S. Pat. No. 5,565,512). In addition, organometallic compounds of arsenic, antimony, and tin can be used (*e.g.,* U.S. Pat. No. 4,281,092, and U.S. Pat. No. 5,554,680). Particular examples include allyl-, propargyl-, triphenyl- allenyl-, and tetraphenyltin and triphenyltin hydroxide.

The fluoroelastomer compositions of the invention can be cured using one or more ammonia-generating compounds along with the curatives described above. "Ammonia-generating compounds" include compounds that are solid or liquid at ambient conditions but that generate ammonia under conditions of cure. Such compounds include, for example, hexamethylenetetramine (urotropin), dicyandiamide, and metal-containing compounds of the formula A^{w+}(NH₃)ₓY^{w-}, wherein A^{w+} is a metal cation such as Cu²⁺, Co²⁺, Co³⁺, Cu⁺, and Ni²⁺; w is equal to the valance of the metal cation; Y^{w-} is a counterion, typically a halide, sulfate, nitrate, acetate; and x is an integer from 1 to 7.

Also useful as ammonia-generating compounds are substituted and unsubstituted triazine derivatives such as those of the formula: 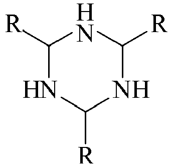 wherein R is a hydrogen atom or a substituted or unsubstituted alkyl, aryl, or aralkyl group having from 1 to 20 carbon atoms. Specific useful triazine derivatives include hexahydro-1,3,5-s-triazine and acetaldehyde ammonia trimer.

The fluoroelastomer compositions of the invention, including the nitrogen-containing cure site monomer-containing fluoropolymer alone, can be cured using one or more peroxide curatives along with a curative as described above. Suitable peroxide curatives generally are those which generate free radicals at curing temperatures, such as those described in WO 99/48939. Dialkyl peroxide and bis(dialkyl peroxide), each of which decomposes at a temperature above 50°C, are especially preferred. In many cases it is preferred to use a ditertiarybutyl peroxide having a tertiary carbon atom attached to peroxy oxygen atom. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides can be selected from such compounds as dicumyl peroxide, dibenzoyl peroxide, tertiarybutyl perbenzoate, a,a'-*bis*(*t*-butylperoxy-diisopropylbenzene), and di[1,3-dimethyl-3-(*t*-butylperoxy)-butyl]carbonate. Generally, 1 to 3 parts of peroxide per 100 parts of perfluoroelastomer is used.

Another curative useful in the present invention has the general formula CH₂=CHR_{f}CH=CH₂, wherein one or more H atoms may be replaced with halogen atoms, such as F, and R_{f} is a C₁-C₈ linear or branched and at least partially fluorinated alkylene, cycloalkylene, or oxyalkylene. Similarly, polymers containing pendant groups of CH₂=CHR_{f}- are also useful as curatives in the present invention. Such curatives are described, for example, in U.S. Pat. No. 5,585,449.

The combination of curative(s) is generally from 0.01 to 10 mol% (more preferably from 0.1 to 5 mol%) of the total fluoropolymer amount.

The fluoropolymer compositions can include any of the adjuvants commonly employed in curable fluoropolymer formulations. For example, one material often blended with a fluoropolymer composition as a part of a curative system is a coagent (sometimes also referred to as a co-curative) composed of a polyunsaturated compound that is capable of cooperating with the peroxide curative to provide a useful cure. These coagents are particularly useful in combination with a peroxide curative. The coagent(s) can generally be added in an amount equal to between 0.1 and 10 parts coagent per hundred parts fluoropolymer (phr), preferably between 1 and 5 phr. Examples of coagents useful with the organo-onium compound of the present invention include triallyl cyanurate; triallyl isocyanurate; tri(methylallyl) isocyanurate; tris(diallylamine)-*s*-triazine; triallyl phosphite; N,N-diallyl acrylamide; hexaallyl phosphoramide; N,N,N',N'-tetraalkyl tetraphthalamide; N,N,N',N'- tetraallyl malonamide; trivinyl isocyanurate; 2,4,6-trivinyl methyltrisiloxane; and tri(5-norbornene-2-methylene)cyanurate. Particularly useful is triallyl isocyanurate. Other useful coagents include the *bis*-olefins disclosed in EP0661304A1, EP0784064A1, EP0769521A1, and US Pat. No. 5,585,449.

Thus, a particular composition of the present invention may include two or more fluoropolymer(s) (provided that at least one fluoropolymer includes interpolymerized units derived from a nitrogen-containing cure site monomer), an amidine curative, a peroxide curative selected to crosslink one or more than one of the fluoropolymer(s), and optionally a coagent such as triallyl isocyanurate.

Additives such as carbon black, stabilizers, plasticizers, lubricants, fillers including fluoropolymer fillers, and processing aids typically utilized in fluoropolymer compounding can be incorporated into the compositions, provided that they have adequate stability for the intended service conditions. In some embodiments, additives that detrimentally affect the clarity of the composition are avoided. In particular, low temperature performance can be enhanced by incorporation of perfluoropolyethers. See, *e.g.,* U.S. Pat No. 5,268,405.

Carbon black fillers can be used to balance properties such as modulus, tensile strength, elongation, hardness, abrasion resistance, conductivity, and processability of the compositions. Suitable examples include MT blacks (medium thermal black) designated N-991, N-990, N-908, and N-907; FEF N-550; and large particle size furnace blacks. When large size particle black is used, 1 to 70 parts filler per hundred parts fluoropolymer (phr) is generally sufficient.

One or more acid acceptors can also be added to the formulations. However, where the presence of extractable metallic compounds is undesirable (such as for semiconductor applications) the use of inorganic acid acceptors should be minimized, and preferably avoided altogether. Commonly used acid acceptors include, for example, zinc oxide, calcium hydroxide, calcium carbonate, magnesium oxide, silicon dioxide (silica), etc. These compounds generally are used in the fluoropolymer formulation to bind any HF or other acids that might be generated at the high temperatures such as may be encountered during curing steps or at the temperatures where the fluoropolymers are intended to function.

The curable fluoropolymer compositions of the invention may also be combined with other curable fluoropolymer compositions such as peroxide-curable fluoropolymer compositions. These additional curable fluoropolymer compositions may also employ small amounts of cure site monomers as a comonomer. Suitable cure site monomers are those which, when combined with a curative (e.g., a peroxide) and, preferably a coagent, will provide a cured composition. Preferably these cure site monomers include at least one halo group (*e.g.,* a bromo or an iodo group).

### Method of making a Curable Composition

The curable fluoropolymer compositions can be prepared by mixing one or more fluoropolymer(s), the cure catalyst, any selected additive or additives, any additional curatives (if desired), and any other adjuvants (if desired) in conventional rubber processing equipment. The desired amounts of compounding ingredients and other conventional adjuvants or ingredients can be added to the unvulcanized fluorocarbon gum stock and intimately admixed or compounded therewith by employing any of the usual rubber mixing devices such as internal mixers, (e.g., Banbury mixers), roll mills, or any other convenient mixing device. The temperature of the mixture during the mixing process typically should not rise above about 110°C. During mixing, it is preferable to distribute the components and adjuvants uniformly throughout the gum.

The cure catalyst components may be blended with the fluoropolymer composition in several forms. The acid and amidine components may be combined to form a salt. The salt may then be blended with the fluoropolymer composition. Alternatively, the amidine and acid components of the cure catalyst may be blended as individual components into the fluoropolymer composition.

The mixture is then processed and shaped, such as by extrusion (*e.g*., into the shape of a film, tube, or hose) or by molding (*e.g*., in the form of sheet or an O-ring). The shaped article can then be heated to cure the fluoropolymer composition and form a cured article.

The significance of the present invention is realized in the thermal processing and shaping of the curable composition. The cure catalyst utilized in the present invention is selected to prevent scorching of the curable composition. Preferably, scorch safe or scorch resistance characteristics are appreciated by a t5 value of greater than 10 minutes according to ASTM D 1646 at a temperature of range of 80 °C to 110 °C.

Subsequent molding or press curing of the compounded mixture usually is conducted at a temperature sufficient to cure the mixture in a desired time duration under a suitable pressure. Generally, this is between 95°C and 230°C, preferably between 150°C and 205°C, for a period of from 1 minute to 15 hours, typically from 5 minutes to 30 minutes. A pressure of between 700 kPa and 21,000 kPa is usually imposed on the compounded mixture in a mold. The molds first may be coated with a release agent and baked.

The molded mixture or press-cured article is then usually post-cured *(e.g.,* in an oven) at a temperature and for a time sufficient to complete the curing, usually between

150 °C and 300 °C, typically at about 230 °C, for a period of from 2 hours to 50 hours or more, generally increasing with the cross-sectional thickness of the article. For thick sections, the temperature during the post cure is usually raised gradually from the lower limit of the range to the desired maximum temperature. The maximum temperature used is preferably about 300 °C, and this value is held for 4 hours or more. This post-cure step generally completes the cross-linking and may also release residual volatiles from the cured compositions. One example of a suitable post-cure cycle involves exposing molded parts to heat under nitrogen or air using six stages of conditions. First, the temperature is increased from 25 to 200 °C over 6 hours, then the parts are held at 200 °C for 16 hours, after which the temperature is increased from 200 to 250 °C over 2 hours. Then the parts are held at 250 °C for 8 hours, after which the temperature is increased from 250 to 300 °C over 2 hours. Then the parts are held at 300°C for 16 hours. Finally, the parts are returned to ambient temperature such as by shutting off the oven heat.

A preferred optically transparent fluoropolymer of the invention is intrinsically capable of transmitting electromagnetic radiation in the wavelength range corresponding to visible light (approximately 390-800 nanometers). In some embodiments, the fluoropolymer blocks some light while transmitting from 25% to 95%. In specific embodiments, from 35% to 75% of light can be transmitted through the polymer. These ranges include all levels in between their end points. As more light is blocked, the fluoropolymer can be described as translucent. In some aspects of the present invention, the fluoropolymer has a haze level of below 50% percent, and clarity of greater than 25%.

The optical properties of the inventive fluoropolymers can be measured using a "haze-gard plus" light meter from BYK-Gardner USA, Silver Spring, MD, or a Lambda 20 UV-VIS spectrophotometer from PerkinElmer, Wellesley, MA, using known methods. Further guidance is found in ASTM D-1033--Standard Test Method for Haze and Luminous Transmittance of Transparent Plastics and ASTM D1003-92.

The fluoropolymer compositions are useful in production of articles such as O-rings, gaskets, tubing, and seals, especially when a clear perfluoroelastomer article is desired. Such articles are produced by molding a compounded formulation of the fluoropolymer composition with various additives under pressure, curing the article, and then subjecting it to a post-cure cycle. The curable compositions formulated without inorganic acid acceptors are particularly well suited for applications such as seals and gaskets for manufacturing semiconductor devices, and in seals for high temperature automotive uses.

The invention will now be described further by way of the following examples.

### EXAMPLES

Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, MO, or may be synthesized by conventional methods.

These abbreviations are used in the following examples: g = grams, min = minutes, mol = mole; mmol = millimole, phr = parts per hundred parts of rubber, hr = hour, °C = degrees Celsius, mL = milliliter, L = liter, psi = pounds per square inch, MPa = megapascals, and N-m = Newton-meter.

The pKa values as reported in some of the examples were obtained from J. Chem. Soc., Perkin Trans. 2, 699 (1989) and J. Chem Soc., Perkin Trans. 2, 521 (1990) and were reported as the dissociation constants of organic acids in a dilute solution of tetrachloromethane. For purposes of the invention, the pKa values are determined by measurement in either water, tetrachloromethane, or pyridine. Those of ordinary skill in the art are capable of selecting an appropriate solvent based upon the solubility of the chosen acid.

The following abbreviations are used throughout the Examples:

| ***ABBREVIATION*** | ***DESCRIPTION*** |
|---|---|
| TFE | tetrafluoroethylene |
| PMVE | perfluoro(methyl vinyl ether) |
| MV5CN | CF₂=CFO(CF₂)₅CN |
| MA | Perfluoro-3-methoxypropyl amidine |
| Catalyst A | Perfluoro-3-methoxypropyl amidine trifluoroacetate |
| Catalyst B | bis-[perfluoro-3-methoxypropyl amidine] perfluoroadipate |
| Catalyst C | Perfluoro-3-methoxypropyl amidine perfluoro-3-methoxypropionate |
| Catalyst D | Perfluoro-3-methoxypropyl amidine acetate |
| Catalyst E | perfluoroadiponitrile bisamidine diacetate |
| Catalyst F | Perfluoro-3-methoxypropyl amidine trifluoromethanesulfonate |
| Fluoropolymer A | Co-polymer of 65.7 mole percent TFE, 33.0 mole percent PMVE and 1.3 mole percent MV5CN made via aqueous emulsion polymerization. |

### AMIDINE PREPARATION

### Preparation of MA - Perfluoro-3-methoxypropyl amidine, CF₃OCF₂CF₂C(=NH)NH₂

A sample of perfluoro-3-methoxypropionyl fluoride, CF₃OCF₂CF₂COF (1561g, 6.7 mol) (obtained from the electrochemical fluorination described in U.S. Pat. No. 2,713,593 and WO 98/50603 of CH₃OCF₂CF₂COOCH₃ prepared as in U.S. Pat. No. 5,235,094) was reacted with excess methanol. Methyl perfluoro-3-methoxypropionate, CF₃OCF₂CF₂COOCH₃ (1463g, 6.0 mol) was isolated by addition of water followed by distillation of the lower fluorochemical product phase. A five-liter (L) flask equipped with a mechanical stirrer charged methyl perfluoro-3-methoxypropionate (1463g, 6.0 mol) in dimethylformamide was reacted with an excess of ammonia (125g, 7.4 mol) and vacuum stripped out methanol. To the solution of perfluoro-3-methoxypropyl amide in dimethylformamide was reacted at -10°C first with pyridine (1160g, 14.7 mol) followed by trifluoroacetic anhydride (1493g, 7.1 mol) available from Aldrich, Milwaukee, WI. Perfluoro-3-methoxypropyl nitrile (1165g, 5.5 mol) with an 18°C boiling point was isolated by distillation from the reaction mixture. A one-liter (L) flask equipped with a mechanical stirrer charged perfluoro-3-methoxypropyl nitrile (120g, 0.6 mol) in diethyl ether and was reacted at -10°C with ammonia (16g, 0.9 mol) to give perfluoro-3-methoxypropyl amidine (106g, 0.5 mol) after vacuum drying having a melting point of 31°C and the structure confirmed by fluorine and proton NMR.

### CATALYST PREPARATIONS

### Catalyst A - Perfluoro-3-methoxylpropyl amidine trifluoroacetate

A 100-ml flask equipped with a magnetic stirrer charged perfluoro-3-methoxypropyl amidine (8.1g, 0.04 mol) prepared above dissolved in methanol and titrated with trifluoroacetic acid (4.1g, 0.04mol) available from Aldrich, pKa = 0.52. Perfluoro-3-methoxypropyl amidine trifluoroacetate (10g, 0.03mol) was isolated after vacuum drying. The structure was confirmed by fluorine and proton NMR.

### Catalyst B - Bis-[perfluoro-3-methoxypropyl amidine] perfluoroadipate (not according to the invention)

A 100-ml flask equipped with a magnetic stirrer charged perfluoro-3-methoxypropyl amidine (20g, 0.09 mol) prepared above dissolved in methanol and titrated with perfluoroadipic acid (12.7g, 0.05mol) prepared by direct fluorination of dimethyl adipate as described in U.S. Pat. No. 5,488,142 and isolated perfluoroadipic acid after water hydrolysis. Bis-[perfluoro-3-methoxypropyl amidine] perfluoroadipate (24g, 0.03mol) was isolated after vacuum drying. The structure was confirmed by fluorine and proton NMR.

### Catalyst C - Perfluoro-3-methoxypropyl amidine perfluoro-3-methoxypropionate (not according to the invention)

A 100-ml flask equipped with a magnetic stirrer charged perfluoro-3-methoxypropyl amidine (20g, 0.09 mol) prepared above dissolved in methanol and titrated with perfluoro-3-methoxypropionic acid (20.2g, 0.09mol) made from perfluoro-3-methoxypropionyl fluoride prepared above and hydrolyzed with water. Perfluoro-3-methoxypropyl amidine perfluoro-3-methoxypropionate (34g, 0.07mol) was isolated after vacuum drying. The structure was confirmed by fluorine and proton NMR.

### Catalyst D - Perfluoro-3-methoxypropyl amidine acetate (not according to the invention)

A 100-ml flask equipped with a magnetic stirrer charged perfluoro-3-methoxypropyl amidine (50g, 0.22 mol) prepared above dissolved in methanol and titrated with acetic acid (14.5g, 0.24mol), available from Aldrich, pKa = 4.76. Perfluoro-3-methoxypropyl amidine acetate (47g, 0.16mol) was isolated after vacuum drying. The structure was confirmed by fluorine and proton NMR.

### Catalyst E - Perfluoroadiponitrile bisamidine diacetate (not according to the invention)

A 100-ml flask equipped with a magnetic stirrer charged perfluoroadiponitrile bisamidine (50g, 0.17 mol) prepared by direct fluorination of dimethyl adipate as described in U.S. Pat. No. 5,488,142 and isolated perfluoroadipate after methanolysis followed by the same chemistry as described above for preparing amidine and dissolved in methanol followed by titration with acetic acid (22g, 0.37mol) available from Aldrich, pKa = 4.76. Perfluoroadiponitrile bisamidine diacetate (68g, 0.17mol) was isolated after vacuum drying. The structure was confirmed by fluorine and proton NMR.

### Catalyst F - Perfluoro-3-methoxypropyl amidine trifluoromethanesulfonate (not according to the invention)

A 100-ml flask equipped with a magnetic stirrer charged perfluoro-3-methoxypropyl amidine (10g 0.04 mol) prepared above dissolved in methanol and titrated with trifluoromethane sulfonic acid (6.6g, 0.04mol) available from the 3M Company, St. Paul. MN, Hammett acidity function, Hₒ= -13.8. Those skilled in the art recognize that a Hammett Acidity Function of -13.8 would have a corresponding pKa of <-1. Perfluoro-3-methoxypropyl amidine trifluoromethane sulfonate (15.2g, 0.04mol) was isolated after vacuum drying. The structure was confirmed by fluorine and proton NMR.

### EXAMPLE 1

Fluoropolymer A (300 g) was banded on a 6" two-roll mill and allowed to mix for 2 to 3 minutes at a mill gap setting that allows the polymer to form an adequate rubber bank. A quantity of Catalyst A, as indicated in Table 1, was slowly added to the rubber bank over a period of about 2 minutes. Six crosscuts were made (3 each side) over the course of about 3 to 4 minutes. The compound was then taken off the mill and the gap set to the tightest setting. The compound was then passed through the mill at the tightest setting, without banding, for 6 or 7 times taking approximately 2 to 3 minutes. The compound was once again taken off the mill and allowed to cool for 5 to 10 minutes prior to testing.

### EXAMPLES 2-3 (not according to the invention) and COMPARATIVE EXAMPLES A-D

Example 1 was repeated with the substitution of Catalyst B (Example 2), C (Example 3), D (Comparative Example A), E (Comparative Example B), and F (Comparative Example C) as indicated in Table 1 (Below). Comparative Example D used MA as the catalyst.

**TABLE 1**

| **COMPONENT** | **EX**.**1** | **EX**.**2** | **EX**.**3** | **COMP**. **EX. A** | **COMP**. **EX**. **B** | **COMP**. **EX**. **C** | **COMP**. **EX**. **D** |
|---|---|---|---|---|---|---|---|
| Fluoropolymer A, phr | 100 | 100 | 100 | 100 | 100 | 100 | 100 |
| MA, phr | 0 | 0 | 0 | 0 | 0 | 0 | 0.60 |
| Catalyst A, phr | 0.95 | 0 | 0 | 0 | 0 | 0 | 0 |
| Catalyst B, phr | 0 | 1.00 | 0 | 0 | 0 | 0 | 0 |
| Catalyst C, phr | 0 | 0 | 1.25 | 0 | 0 | 0 | 0 |
| Catalyst D, phr | 0 | 0 | 0 | 0.60 | 0 | 0 | 0 |
| Catalyst E, phr | 0 | 0 | 0 | 0 | 0.80 | 0 | 0 |
| Catalyst F, phr | 0 | 0 | 0 | 0 | 0 | 1.00 | 0 |

### RESULTS

Rheology and scorch are shown in Tables 2 and 3 respectively.

Cure rheology tests were carried out using about 9 g uncured, compounded sample using a rheometer marketed under the trade designation Monsanto Moving Die Rheometer (MDR) Model 2000 by Monsanto Company, Saint Louis, MO, in accordance with ASTM D 5289-93a at 160 °C, 10 minute elapsed time, and a 0.5 degree arc. Both the minimum torque (M_{L}) and highest torque attained during a specified period of time when no plateau or maximum torque was obtained (M_{H}) were measured. Also measured were the time for the torque to increase 2 units above M_{L} (t_{S}2), the time for the torque to reach a value equal to M_{L} + 0.5(M_{H} - M_{L}), (t'50), and the time for the torque to reach M_{L} + 0.9(M_{H} - M_{L}), (t'90). Delta Torque was also calculated by taking the difference between the minimum torque (M_{L}) and highest torque attained during a specified period of time when no plateau or maximum torque was obtained (M_{H}). Results are reported in Table 2 (below).

**TABLE 2**

| | **EX. 1** | **EX. 2** | **EX. 3** | **COMP. EX**. **A** | **COMP**. **EX**. B | **COMP. EX. C*** | **COMP. EX. D** |
|---|---|---|---|---|---|---|---|
| M_{L}, in-lb | 1.21 | 1.24 | 1.21 | 2.06 | 3.50 | 1.18 | 1.87 |
| (N-m) | (0.137) | (0.140) | (0.137) | (0.233) | (0.395) | (0.133) | (0.211) |
| M_{H}, in-lb | 3.54 | 4.35 | 4.13 | 4.70 | 8.83 | 1.49 | 4.66 |
| (N-m) | (0.400) | (0.491) | (0.467) | (0.531) | (0.997) | (0.168) | (0.526) |
| Delta Torque in-lb | 2.33 | 3.11 | 2.92 | 2.64 | 5.33 | 0.31 | 2.79 |
| (N-m) | (0.263) | (0.351) | (0.330) | (0.298) | (0.602) | (0.035) | (0.315) |
| t_{S}2, min | 6.99 | 4.49 | 3.14 | 2.40 | 1.40 | - | 2.02 |
| t'50, min | 2.44 | 3.28 | 2.11 | 1.34 | 1.75 | 5.33 | 1.36 |
| t'90, min | 7.79 | 7.94 | 5.63 | 3.88 | 5.00 | 8.91 | 3.23 |

| | | | | | | | |
|---|---|---|---|---|---|---|---|
| * Comparative Sample C had a gummy texture after the 10-minute cycle and with a Delta Torque less than 1.00 for all intents and purposes is considered uncured. | | | | | | | |

Mooney Scorch measurements were carried out using about 50 g uncured, compounded sample using a rheometer under the trade designation Monsanto Mooney MV 2000 by Monsanto Company, Saint Louis, MO, in accordance with ASTM D 1646-04 Part C at 100 °C, a one-minute preheat, a 30 minute test time, and using the large rotor size. The minimum viscosity attained during the test, reported in Mooney Units (MU) was measured. Also measured were the time for the viscosity to increase 5 (MU) above the minimum viscosity (t₅), and the time for the viscosity to increase 10 (MU) above the minimum viscosity (t₁₀).

Table 3 (below) reports Mooney scorch test results for Examples 1 - 3 and Comparative Examples A - D.

**TABLE 3**

| | EX. 1 | EX. 2 | EX. 3 | COMP. EX. A | COMP. EX. B | COMP. EX. C | COMP. EX. D |
|---|---|---|---|---|---|---|---|
| Minimum viscosity (MU) | 131.5 | 122.5 | 126.9 | 167.9 | 169.8 | 118.5 | 139.6 |
| t₅ (min) | > 30 | 17.51 | > 30 | 5.07 | 3.18 | > 30 | 4.03 |
| t₁₀ (min) | > 30 | 23.01 | > 30 | 5.90 | 5.59 | > 30 | 4.57 |

Various modifications and alterations of this invention may be made by those skilled in the art without departing from the scope of this invention, and it should be understood that this invention is not to be unduly limited to the illustrative embodiments set forth herein.

A number of embodiments of the invention have been described.

## Claims

1. A curable composition comprising:
(a) a cure catalyst derived from a mono-amidine and trifluoroacetic acid; and
(b) a fluoropolymer comprising inter-polymerized units derived from a nitrogen containing cure site monomer.

2. A curable composition according to claim 1, wherein the curable composition is scorch safe.

3. A curable composition according to claim 1, wherein the curable composition has a t₅ value of greater than 10 minutes according to ASTM D 1646 at a temperature of range of 80 °C to 110 °C.

4. A curable composition according to claim 1, wherein the mono-amidine is selected from CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ and C₃F₇-O-CF(CF₃)C(=NH)NH₂.

5. A curable composition according to claim 1, comprising a fluoropolymer having interpolymerized units derived from monomers selected from perfluoroolefins, partially-fluorinated olefins, non-fluorinated olefins, vinylidene fluoride, perfluorovinyl ethers, and combinations thereof.

6. A curable composition according to claim 1, wherein said cure site monomer comprises a nitrile-containing monomer, optionally selected from the formula CF₂=CFO(CF₂)_{L}CN; CF₂=CFO(CF₂)ᵤOCF(CF₃)CN; CF₂=CFO[CF₂CF(CF₃)O]_{q}(CF₂O)_{y}CF(CF₃)CN; or CF₂=CF[OCF₂CF(CF₃)]ᵣO(CF₂)ₜCN; wherein L = 2-12; q = 0-4; r = 1-2; y = 0-6; t = 1-4, and u = 2-6; and perfluoro(8-cyano-5-methyl-3,6-dioxa-1-octene).

7. A curable composition according to claim 1, further comprising at least one of:
a filler, optionally selected from fluoropolymer filler, carbon black, and combinations thereof; and
an additional curative, optionally selected from ammonia-generating compounds,
substituted triazine derivatives, unsubstituted triazine derivatives, peroxides, bis-aminophenols, bis-amidooximes, and organotin compounds.

8. A method for improving the scorch resistance of a curable composition, the method comprising mixing a cure catalyst derived from a mono-amidine and trifluoroacetic acid with a fluoropolymer comprising inter-polymerized units derived from a nitrogen containing cure site monomer to form an essentially scorch safe curable composition.

9. A method according to claim 8, wherein the curable composition exhibits a resistance to scorch as indicted by a t₅ value of greater than 10 minutes according to ASTM D 1646 at a temperature of range of 80 °C to 110 °C.

10. A shaped article comprising the curable composition of claim 1.

11. A shaped article according to claim 10 having a visible light transmission selected from at least 35%, 40%, 45%, 50%, 55%, 60%, 65%, 70%, 75%, 80%, 85%, 90%, and 95%.

12. A method of making a fluoropolymer composition, the method comprising:
(a) forming a mixture comprising a cure catalyst derived from a mono-amidine and trifluoroacetic acid with a fluoropolymer comprising inter-polymerized units derived from a nitrogen containing cure site monomer;
(b) shaping the mixture;
(c) curing the shaped mixture; and optionally
(d) heat aging the cured mixture;
wherein optionally the mono-amidine and the trifluoroacetic acid are combined prior to step (a) to create a salt.

13. A method according to claim 12, wherein the cure catalyst is a mono-amidine selected from CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ and C₃F₇-O-CF(CF₃)C(=NH)NH₂.

14. A cure catalyst comprising a perfluorinated mono-amidine salt derived from a perfluorinated mono-amidine and trifluoroacetic acid, wherein optionally the perfluorinated mono-amidine salt is selected from CF₃-O-CF₂CF₂C(=NH)NH₃^{+ -}OCOCF₃.

## Patentansprüche

1. Eine härtbare Zusammensetzung, umfassend:
(a) einen Härtungskatalysator, abgeleitet von einem Monoamidin und Trifluoressigsäure; und
(b) ein Fluorpolymer, umfassend interpolymerisierte Einheiten, die von einem stickstoffhaltigen Monomer mit Härtungsstellen abgeleitet sind.

2. Eine härtbare Zusammensetzung nach Anspruch 1, wobei die härtbare Zusammensetzung scorchsicher ist.

3. Eine härtbare Zusammensetzung nach Anspruch 1, wobei die härtbare Zusammensetzung einen t₅-Wert von mehr als 10 Minuten gemäß ASTM D 1646 bei einer Temperatur im Bereich von 80 °C bis 110 °C aufweist.

4. Eine härtbare Zusammensetzung nach Anspruch 1, wobei das Monoamidin ausgewählt ist aus CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ und C₃F₇-O-CF(CF₃)C(=NH)NH₂.

5. Eine härtbare Zusammensetzung nach Anspruch 1, umfassend ein Fluorpolymer mit interpolymerisierten Einheiten, die von Monomeren abgeleitet sind, die ausgewählt sind aus Perfluorolefinen, teilweise fluorierten Olefinen, nicht-fluorierten Olefinen, Vinylidenfluorid, Perfluorvinylethern und Kombinationen davon.

6. Eine härtbare Zusammensetzung nach Anspruch 1, wobei das Monomer mit Härtungsstellen ein nitrilhaltiges Monomer umfasst, gegebenenfalls ausgewählt aus der Formel
CF₂=CFO(CF₂)_{L}CN; CF₂=CFO(CF₂)ᵤOCF(CF₃)CN;
CF₂=CFO[CF₂CF(CF₃)O]_{q}(CF₂O)_{y}CF(CF₃)CN; oder
CF₂=CF[OCF₂CF(CF₃)]ᵣO(CF₂)ₜCN; wobei L = 2-12; q = 0-4; r = 1-2; y = 0-6; t = 1-4 und u = 2-6; und Perfluor(8-cyano-5-methyl-3,6-dioxa-1-octen).

7. Eine härtbare Zusammensetzung nach Anspruch 1, ferner umfassend mindestens eines von:
einem Füllstoff, gegebenenfalls ausgewählt aus Fluorpolymer-Füllstoff, Ruß und Kombinationen davon; und
einem zusätzlichen Härter, gegebenenfalls ausgewählt aus Ammoniak erzeugenden Verbindungen, substituierten Triazinderivaten, nicht-substituierten Triazinderivaten, Peroxiden, Bis-aminophenolen, Bis-amidooximen und Organozinnverbindungen.

8. Ein Verfahren zum Verbessern der Scorchbeständigkeit einer härtbaren Zusammensetzung, wobei das Verfahren Mischen eines Härtungskatalysators, der von einem Monoamidin und Trifluoressigsäure abgeleitet ist, mit einem Fluorpolymer, das interpolymerisierte Einheiten umfasst, die von einem stickstoffhaltigen Monomer mit Härtungsstellen abgeleitet sind, umfasst, um eine im Wesentlichen scorchsichere härtbare Zusammensetzung zu bilden.

9. Ein Verfahren nach Anspruch 8, wobei die härtbare Zusammensetzung eine Scorchbeständigkeit, wie durch einen t₅-Wert angegeben, von mehr als 10 Minuten gemäß ASTM D 1646 bei einer Temperatur im Bereich von 80 °C bis 110 °C aufweist.

10. Ein Formgegenstand, umfassend die härtbare Zusammensetzung nach Anspruch 1.

11. Ein Formgegenstand nach Anspruch 10, der eine Durchlässigkeit von sichtbarem Licht, ausgewählt aus mindestens 35 %, 40 %, 45 %, 50 %, 55 %, 60 %, 65 %, 70 %, 75 %, 80 %, 85 %, 90 % und 95 %, aufweist.

12. Ein Verfahren zur Herstellung einer Fluorpolymerzusammensetzung, wobei das Verfahren umfasst:
(a) Bilden einer Mischung, umfassend einen Härtungskatalysator, der von einem Monoamidin und Trifluoressigsäure abgeleitet ist, mit einem Fluorpolymer, das interpolymerisierte Einheiten umfasst, die von einem stickstoffhaltigen Monomer mit Härtungsstellen abgeleitet sind;
(b) Formen der Mischung;
(c) Härten der geformten Mischung; und gegebenenfalls
(d) Wärmealterung der gehärteten Mischung;
wobei gegebenenfalls das Monoamidin und die Trifluoressigsäure vor Schritt (a) kombiniert werden, um ein Salz zu bilden.

13. Ein Verfahren nach Anspruch 12,
wobei der Härtungskatalysator ein Monoamidin ist, ausgewählt aus CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ und C₃F₇-O-CF(CF₃)C(=NH)NH₂.

14. Ein Härtungskatalysator, umfassend ein perfluoriertes Monoamidinsalz, das von einem perfluorierten Monoamidin und Trifluoressigsäure abgeleitet ist, wobei gegebenenfalls das perfluorierte Monoamidinsalz ausgewählt ist aus
CF₃-O-CF₂CF₂C(=NH)NH₃^{+ -}OCOCF₃.

## Revendications

1. Composition durcissable comprenant :
(a) un catalyseur de durcissement dérivé d'une mono-amidine et d'acide trifluoroacétique ; et
(b) un fluoropolymère comprenant des motifs interpolymérisés dérivés d'un monomère à site de durcissement contenant de l'azote.

2. Composition durcissalbe selon la revendication 1, où la composition durcissable présente une résistance au roussissement.

3. Composition durcissable selon la revendication 1, où la composition durcissable a une valeur t₅ supérieure à 10 minutes selon l'ASTM D 1646 à une température de la plage de 80 °C à 110 °C.

4. Composition durcissable selon la revendication 1, dans laquelle la mono-amidine est choisie parmi CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ et C₃F₇-O-CF(CF₃)C(=NH)NH₂.

5. Composition durcissable selon la revendication 1, comprenant un fluoropolymère comportant des motifs interpolymérisés dérivés de monomères choisis parmi des perfluoro-oléfines, des oléfines partiellement fluorées, des oléfines non fluorées, du fluorure de vinylidène, des éthers perfluorovinyliques, et leurs combinaisons.

6. Composition durcissable selon la revendication 1, dans laquelle ledit monomère à site de durcissement comprend un monomère contenant du nitrile, facultativement choisi parmi la formule CF₂=CFO(CF₂)_{L}CN ; CF₂=CFO(CF₂)ᵤOCF(CF₃)CN ;
CF₂=CFO[CF₂CF(CF₃)O]_{q}(CF₂O)_{y}CF(CF₃)CN ; ou
CF₂=CF[OCF₂CF(CF₃)]ᵣO(CF₂)ₜCN ; dans laquelle L = 2 à 12 ; q = 0 à 4 ; r = 1 à 2 ; y = 0 à 6 ; t = 1 à 4, et u = 2 à 6 ; et perfluoro(8-cyano-5-méthyl-3,6-dioxa-1-octène).

7. Composition durcissable selon la revendication 1, comprenant en outre au moins une substance parmi :
une charge, facultativement choisie parmi une charge fluoropolymère, du noir de carbone, et des combinaisons de ceux-ci ; et
un durcisseur supplémentaire, facultativement choisi parmi des composés produisant de l'ammoniac, des dérivés de triazine substitués, des dérivés de triazine non substitués, des peroxydes, des bis-aminophénols, des bis-amido-oximes, et des composés d'organo-étain.

8. Procédé pour améliorer la résistance au roussissement d'une composition durcissable, le procédé comprenant mélanger un catalyseur de durcissement dérivé d'une mono-amidine et d'acide trifluoroacétique avec un fluoropolymère comprenant des motifs interpolymérisés dérivés d'un monomère à site de durcissement contenant de l'azote pour former une composition durcissable pratiquement résistante au roussissement.

9. Procédé selon la revendication 8, dans lequel la composition durcissable présente une résistance au roussissement, telle qu'indiquée par une valeur t₅ supérieure à 10 minutes selon l'ASTM D 1646 à une température de la plage de 80°Cà110°C.

10. Article mis en forme comprenant la composition durcissable selon la revendication 1.

11. Article mis en forme selon la revendication 10, possédant une transmission de lumière visible choisie parmi au moins environ 35 %, 40 %, 45 %, 50 %, 55 %, 60 %, 65 %, 70 %, 75 %, 80 %, 85 %, 90 %, et 95 %.

12. Procédé de fabrication d'une composition de fluoropolymère, le procédé comprenant :
(a) la formation d'un mélange comprenant un catalyseur de durcissement dérivé d'une mono-amidine et d'acide trifluoroacétique avec un fluoropolymère comprenant des motifs interpolymérisés dérivés d'un monomère à site de durcissement contenant de l'azote ;
(b) la mise en forme du mélange ;
(c) le durcissement du mélange mis en forme ; et facultativement
(d) le vieillissement à la chaleur du mélange durci ;
dans lequel, facultativement, la mono-amidine et l'acide trifluoroacétique sont combinés avant l'étape (a) de façon à créer un sel.

13. Procédé selon la revendication 12,
dans lequel le catalyseur de durcissement est une mono-amidine choisie parmi CF₃C(=NH)NH₂, CF₃-O-CF₂CF₂C(=NH)NH₂, C₇F₁₅C(=NH)NH₂, C₂F₅C(=NH)NH₂, C₃F₇C(=NH)NH₂ et C₃F₇-O-CF(CF₃)C(=NH)NH₂.

14. Catalyseur de durcissement comprenant un sel de mono-amidine perfluorée, dérivé d'une mono-amidine perfluorée et d'acide trifluoroacétique, dans lequel, facultativement, le sel de mono-amidine perfluorée est choisi parmi CF₃-O-CF₂CF₂C(=NH)NH₃^{+ -}OCOCF₃.
